# EUROPEAN PATENT APPLICATION

(11) **EP 2 354 605 A1**
(43) Date of publication of application: **10.08.2011**
(21) Application number: 09828666.9
(22) Date of filing: 28.10.2009
(51) Int. Cl.: F16J 15/14

(54) **SEALING PROFILE**

(30) Priority: 28.11.2008 ES 200803399
(71) Applicant: Airbus Operations, S.L., 28906 Getafe Madrid (ES)
(72) Inventor: MARTÍNEZ VALDEGRAMA, Vicente, E-28430 Alpedrete (Madrid) (ES); BURGOS GALLEGO, Francisco de Paula, E-28320 Pinto (Madrid) (ES)
(74) Representative: Ungria Lopez, Javier
(86) International application number: PCT/ES2009/070469
(87) International publication number: WO 2010/061021

(57) **Abstract**

Comprising an elastic material in order to carry out the joining and sealing between a first (2) and a second (3) element; and which has the aim of avoiding the formation of pinching of the sealing profile when carrying out the assembly and sealing between the first (2) and second (3) elements. For this, the sealing profile (6 and 7) presents a wedge-shaped configuration which projects with respect to the first (2) element, and on the sloping surface of which the second (3) element presses in order to facilitate its deformation and the assembly and sealing of the first (2) and second (3) element, in which position the surface of the wedge shape that projects with respect to the first element (2) presses against the second element (3).

The invention is preferably applicable to aeronautical structures, particularly to those structures where both first and second elements form part of the aerodynamic surface.

## Description

### OBJECT OF THE INVENTION

As stated in the title of this descriptive specification, the present invention relates to a sealing profile that is intended for carrying out the assembly and sealing between two elements: and which has the aim of facilitating the carrying out of said assembly and sealing, all this in a way that prevents any lack of imperviousness from occurring.

In general, the invention is applicable in any sector of industry in which it is required to effect the assembly and impervious joining between two elements, and more specifically it is applicable in the aeronautical industry, in order to effect the joining and sealing between elements forming part of the aerodynamic lining.

### BACKGROUND OF THE INVENTION

In the field of aeronautical structures design, there exists the requirement of guaranteeing the assembly and sealing between elements whose outer surface constitutes the aerodynamic surface. An example of this union is the fastening that has to be done In the fuselage of the aircraft of a device permitting ventilation of the auxiliary power unit (APU, conventionally incorporated in aircraft), when the APU is in operation and the aircraft is on the ground. For this, the fuselage is provided with an opening in which the ventilation device is mounted, this device including folding means that permit said ventilation to be carried out, such as hatches for example.

This assembly is carried out by means of a sealing profile which has the drawback that its cross-section has a configuration such that, when the ventilation device is mounted on the opening in the fuselage by means of the sealing profile, the sealing profile can become pinched by the edge of the opening and the device, which produces a lack of imperviousness together with breakage of the sealing profile.

These circumstances have a greater probability of occurring when the following characteristics are present in the assembly: the assembly of the device is done from the inside to the outside, the sealing profile requires being installed prior to the device, the attachment surface between the pieces to seal is continuous and closed, the parts that are joined are fixed in the final assembly, and the parts to seal are not joined together, which permits a relative movement between them due, among other factors, to vibrations.

Moreover, in those locations in which accessibility is limited or null, there exists in addition the need to guarantee a correct assembly of the parts and sealing profiles without any need for inspection, which cannot be ensured with the sealing profiles that are conventionally used.

### DESCRIPTION OF THE INVENTION

In order to solve these drawbacks and achieve the objectives stated above, the invention has developed a new sealing profile which, as with those contained in the state of the art, consists of an elastic material that carries out the assembly and sealing between a first and second element, for which the profile is fixed to the first element. The invention presents the novelty that the sealing profile also includes a wedge-shaped configuration which projects with respect to the first element, which has a sloping surface in which the second element presses in order to facilitate its deformation, with the assembly and sealing of the first and second element being carried out due to the surface of the wedge, which projects with respect to the first element, remaining pressed against the second element.

Consequently, the sealing profile of the invention presents an advantageous wedge-shaped configuration which facilitates the assembly and sealing between the first and second element, at the same time as preventing the sealing profile from being able to become pinched by the first and second element, which ensures the imperviousness of the joint between the first and second element.

As has already been mentioned, in the preferred embodiment of the invention, the first and second element belong to an aeronautical structure in which the first element is an aerodynamic lining provided with an opening and the second element is a device forming part of the aerodynamic lining, such as might be for example a ventilation device as was stated in the previous section.

The zone of the inventive profile, which projects with respect to the first element, is an end curved zone located In the opening. In the preferred embodiment of the invention, two possible sealing profile configurations are used. One configuration comprises a straight portion that is fixed to the first element and which is followed by a second circular tubular portion that partially projects from the first element and which ends in a triangular tubular portion. The second configuration comprises a straight portion, which is fixed to the first element; and which is followed by an approximately triangular tubular portion with a rounded vertex that projects with respect to the first element.

The invention furthermore includes the characteristic that the sloping surface can be provided with a coating of an anti-friction material in order to facilitate the impervious assembly between the first and second element.

This anti-friction material can be fiber glass or any other material performing this function.

The described configurations of the sealing profile facilitate its deformation and the assembly and sealing between the first and second element, at the same time as guaranteeing the imperviousness between them.

Below, in order to facilitate a better understanding of this descriptive specification and forming an integral part thereof, a series of figures is attached in which the object of the invention has been represented by way of illustration and non-limiting,

### BRIEF DESCRIPTION OF THE FIGURES

**Figure 1**.- Shows an exploded schematic representation of the assembly of a ventilation device in an opening of the fuselage of an aircraft by means of a conventional sealing profile.
**Figure 2**.- Shows a schematic view of the final assembly carried out in accordance with the previous figure, in which pinching occurs of the sealing profile, endangering the imperviousness of the join.
**Figure 3**.- Shows an exploded schematic view of the assembly of a ventilation device in an opening of the fuselage of an aircraft in accordance with an embodiment of the sealing profile according to the invention.
**Figure 4**.- Shows a view of the final result of the sealing profile of the previous figure.
**Figure 5**.- Shows another example of embodiment of the sealing profile of the invention.

### DESCRIPTION-OF THE PREFERRED FORM OF EMBODIMENT

A description of the invention is made below, based on the figures commented on above.

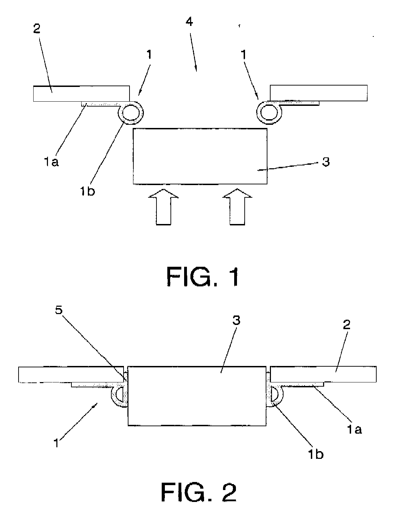

Described first, with the aid of figures 1 and 2, is the sealing profile 1 conventionally used for joining a first element 2 and a second element 3, for which in the example of embodiment the first element 2 consists of an aerodynamic lining 2 provided with an opening 4 in which the second element 3 consisting of a device 3 is assembled and sealed by means of the sealing profile 1.

For this, the sealing profile 1 is provided with a straight portion that is fixed on the aerodynamic lining 2 comprising the first element. The first section 1a ends in a circular tubular section 1b which projects with respect to the first element 2, occupying part of the opening 4, as shown in figure 1.

The device 3 can, for example, be a device provided for permitting ventilation to be carried out of the APU, which is conventionally included in aircraft, when the aircraft is stationary on the ground and the APU is started up So, for example, the ventilation device can be a duct provided with hatches which form part of the aerodynamic lining and which are opened to permit the said ventilation to be carried out.

The sealing profile 1 is an elastic material, such as rubber for example.

This sealing profile presents the drawback that, when carrying out the assembly and sealing of the device 3 in the opening 4, it is possible for a pinching 5 to occur in the circular tubular portion 1b of the sealing profile 1 due to the aerodynamic lining 2 and the device 3, which can produce a lack of imperviousness as well as breakage of the sealing profile 1.

In order to solve the above drawbacks, the invention has developed a new sealing profile 6 made of rubber and with a wedge-shaped configuration, which consists of a straight section 6a fixed on the aerodynamic lining 2, and which ends in an approximately triangular tubular portion 6b provided with a rounded vertex 6c that projects with respect to the lining 2, occupying part of the opening 4.

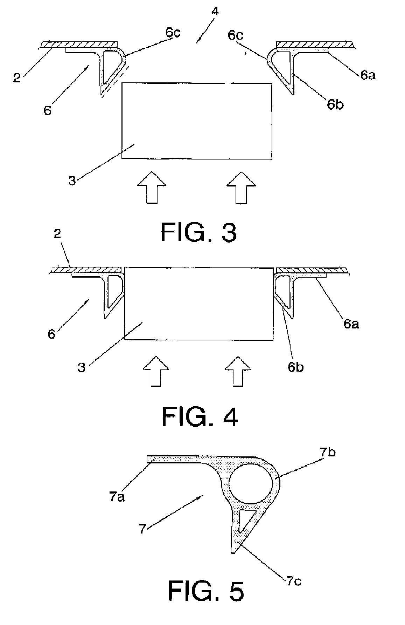

This configuration permits the assembly and sealing of the device 3 to be carried out smoothly in the opening 4, for which the device 3 is located above the sloping surface of the approximately triangular tubular portion 6b, which becomes deformed when pressed, causing the device 3 to advance without pushing the sealing profile 6 towards the opening, in such a way that the device 3 is housed in the opening 4 in which it is retained by means of the rounded vertex 6c which presses against the side walls of the device 3, thus carrying out the assembly and sealing of the join between the device 3 and the aerodynamic lining 2 (Figure 4).

A second embodiment of the invention is shown in figure 5 in which the sealing profile 7 comprises a straight portion 7a fixed to the aerodynamic lining 2, and which is followed by a circular tubular portion 7b partially projecting from the aerodynamic lining 2 and which ends in a triangular tubular portion 7c. This sealing profile 7 provides greater rigidity and less malleability than the sealing profile 6, so this sealing profile 6 is used for less violent assemblies.

In order to facilitate the entry of the device 3 into the opening 4, both sealing devices 6 and 7 can incorporate a coating of an anti-friction material, such as fiber glass for example, on the sloping surface of the wedge. In the case of the profile 6 this coating is provided on the sloping surface of the approximately triangular tubular portion 6b, and In the case of the sealing profile 7 on the sloping surface of the triangular tubular portion 7c and part of the circular tubular portion 7b.

In either case, the incorporation of an anti-friction material depends on the angle formed by the wedge-shaped configuration, since the greater the angle of the wedge, the more necessary it becomes to incorporate the lining of anti-friction material.

Consequently, by means of the configurations described, the assembly and sealing is permitted to be carried out between a first element 2 and a second element 3 efficiently and simply, avoiding the formation of pinching in the sealing profile 6 and 7, which ensures a correct assembly and sealing.

## Claims

1. **SEALING PROFILE**, which comprises an elastic material and which is intended to carry out the joining and sealing between a first element (2) and a second element (3), for which the sealing profile is fixed to the first element (2); is **characterized in that** it comprises a wedge-shaped configuration which projects with respect to the first element (2), and on which sloping surface of the wedge the second element (3) presses in order to facilitate its deformation and the assembly and sealing of the first (2) and second (3) element, with the surface of the wedge shape that projects with respect to the first element (2) remaining pressing against the second element (3).

2. **SEALING PROFILE**, according to claim 1, **characterized in that** the first (2) and second (3) element belong to an aeronautical structure.

3. **SEALING PROFILE**, according to claim 2, **characterized in that** the first (2) and second (3) element form part of the aerodynamic surface of the aeronautical structure.

4. **SEALING PROFILE**, according to claim 3, **characterized in that** the first element (2) is an aerodynamic lining provided with an opening (4) and the second element (3) is a device that is mounted and sealed in the opening (4).

5. **SEALING PROFILE**, according to claim 4, **characterized in that** the zone that projects with respect to the first element (2) is a curved end zone located in the opening (4).

6. **SEALING PROFILE**, according to claim 1, **characterized in that** it comprises a straight portion (6a) fixed to the first element (2) and which is followed by a circular tubular portion (6b) which partially projects from the first element (2) and which ends in a triangular tubular portion (6c).

7. **SEALING PROFILE**, according to claim 1, **characterized in that** it comprises a straight portion (7a) followed by an approximately triangular tubular portion (7b) with a rounded vertex (7c) which projects with respect to the first element (2).

8. **SEALING PROFILE**, according to claim 1, **characterized in that** the sloping surface of the wedge includes a coating of anti-friction material.

9. **SEALING PROFILE**, according to claim 8, **characterized in that** the anti-friction material is fiber glass.
